# EUROPEAN PATENT SPECIFICATION

(11) **EP 3 317 193 B1**
(45) Date of publication and mention of the grant of the patent: **03.06.2020**
(21) Application number: 15897292.7
(22) Date of filing: 30.06.2015
(51) Int. Cl.: B65D 1/36, E04D 11/00, A01G 9/02, B65D 21/028

(54) **MULTI-FUNCTIONAL TRAY**
MULTIFUNKTIONSSCHALE
PLATEAU MULTI-FONCTION

(43) Date of publication of application: 09.05.2018
(73) Proprietor: Lim, Jee Keng, Singapore 739918 (SG)
(72) Inventor: Lim, Jee Keng, Singapore 739918 (SG)
(74) Representative: Hering, Hartmut
(86) International application number: PCT/SG2015/050192
(87) International publication number: WO 2017/003373

(56) References cited:
- WO-A1-2013/012319
- FR-A1- 2 929 632
- FR-A1- 2 979 796
- JP-A- H11 318 243
- JP-A- 2001 078 594
- JP-A- 2003 116 356
- US-A- 3 142 133
- US-A- 4 047 329
- US-A1- 2009 260 284
- US-A1- 2012 227 319
- US-B1- 6 606 823

## Description

### FIELD OF THE INVENTION

This invention relates to a multi-functional tray that can be used in various applications to form different products, such as planter board for green roof plantation, thermal insulation structure for roof deck insulation, solid concrete panel for building construction, etc.

### BACKGROUND OF THE INVENTION

In building construction, temporary formworks are often used for casting concrete into a desired shape. Once the concrete is cured, the formwork will be removed. For example, a formwork may be used to form a solid concrete panel which is generally lightweight and robust that is suited for low-cost, mass housing schemes. In green roof application, planter boards are often used for containing the planting medium and plants. These planter boards usually have small reservoirs that help in storing or draining water. In roof deck thermal insulation application, temporary formworks are often used for casting thermal insulation panels. Once the panel is cured, the formwork will be removed.

FR 2 979 796 A1 relates to a container for planting and growing plants, in the form of a one-piece assembly. It comprises a plurality of planting and growing cavities, each of the cavities being separated from the other cavities by at least one partition, known as a dividing partition, extending over the entire periphery of said cavity; and comprises a bottom wall and at least one opening for letting water drain from said cavity to outside said container. FR 2 979 796 A1 also relates to structures created with such containers and to uses of such containers.

WO 2013/012319 A1 relates to a roof growth system, comprising: at least one holder-like container for placing on a roof and having a growth substrate therein during use; a connection for arranging the container on the roof at least during use, further comprising: at least one conduit to be connected at least to a liquid source; and an irrigation which is associated with the holder-like container and which can be connected at least to the conduit, wherein the connection comprises an engagement formed on or between an outer side of a side wall of the container and the conduit.

FR 2 929 632 A1 relates to a device having a retaining bracket that is extended perpendicular to a slope, and a container, containing a substrate and vegetation. A base of the container is stooped on the bracket to maintain the container on the slope. A cable is integrated to the retaining bracket, where the cable has an upper part fixed to a slopping roof or fitted at a saddle on a ridge of the slopping roof for being extended along the slope. The upper part of the cable has a loop that is fastened to a hooking system on the roof.

JP 2001 078594 A, JP H11 318243 A and JP 2003 116356 A relate to planting trays.

Each of the above mentioned formworks and planter board, as well as other prior art, was designed for used in a specific application only but not otherwise. For example, a planter board is always designed for used in growing plants only but not for casting a cement panel for building construction. Similarly, a formwork designed for used in casting a thermal insulation panel is not suitable for used in growing plants in green roof application. In other words, different designs and configurations of boards, formworks or containers are required for different types of applications. Hence, there exists a need for having a universal container that can be used for different types of applications.

### SUMMARY OF THE INVENTION

The above and other problems are solved and an advance in the art is made by the tray in accordance with the present invention as defined by the claims. This invention relates to a multi-functional tray that can be used in various applications to form different products, such as planter board for green roof plantation, thermal insulation structure for roof deck, solid cement panel for building construction, etc. The tray in accordance with the present invention is lightweight (about 1.5 kg) and can be used to formed a modular structure comprises of multiple trays that are securely interlocked with each other. Furthermore, some unique features of the tray, such as having partitions and securing units, enhance the strength, rigidity and robustness of the tray.

A tray in accordance with an embodiment of the present invention comprises an upper portion, a lower portion, and a backing layer connected between the upper portion and the lower portion. The lower portion comprises a plurality of reservoirs positioned spaced across below the backing layer. Each reservoir comprises an opening defined through the backing layer and a base having a through hole that allows water to pass through and a plurality of protrusions adjacent to the through hole for contacting with a support surface on which the tray is installed leaving a gap between the through hole and the support surface.

The upper portion comprises a sidewall extending upwards from a peripheral edge of the backing layer to form a cavity for containing material wherein the sidewall has a height that defines the capacity of the cavity. A plurality of dividers extending upward from the backing layer to divide the backing layer into a plurality of partitions within the cavity with each partition encompasses a certain number of the reservoirs. Each divider has a height lower than the height of the sidewall such that two layers of material can be formed in the upper portion with a first layer formed within the partitions and a second layer formed over the first layer up to a top end of the sidewall. A plurality of securing units formed at an inner surface of the sidewall and configured to secure the material in the cavity to the sidewall such that the material is prevented from separating from the inner surface of the sidewall.

The tray further comprises a plurality of interlocking units formed at an outer surface of the sidewall and configured to interlock the tray with another tray so that a modular structure having multiple of the trays securely interlocked by the interlocking units can be formed. Multi-directional water passageways formed underside the tray which are spaces defined by the backing layer, the reservoirs and the support surface on which the tray is installed.

In some embodiments, the height of each of the dividers is half of the height of the sidewall. The backing layer is divided into nine partitions. The plurality of reservoirs are being arranged as evenly spaced apart arrays. The tray is made of a high compressive strength material.

In some embodiments, each of the securing units is a pair of elongate L-shaped brackets arranged to be facing each other on the inner surface of the sidewall to form a rectangular hollow housing having a slot.

In some embodiments, the first layer of the upper portion is filled with a water retention material and the second layer of the upper portion is filled with a planting medium.

In some embodiments, the first layer of the upper portion is filled with a thermal insulation material and the second layer of the upper portion is filled with cement, mortar, or concrete.

In some embodiments, the first layer and the second layer of the upper portion and the plurality of reservoirs of the lower portion are filled with cement, mortar, or concrete.

A modular planting structure in accordance with an embodiment of this invention comprises a plurality of the trays as recited above wherein the trays are securely interlocked with each other by the interlocking units. The first layer of each of the trays is filled with a water retention material and the second layer of each of the trays is filled with a planting medium.

A modular thermal insulation structure in accordance with an embodiment of this invention comprises a plurality of the trays as recited above wherein the trays are securely interlocked with each other by the interlocking units. The first layer of each of the trays is filled with a thermal insulation material and the second layer of each of the trays is filled with cement, mortar, or concrete.

A modular building structure in accordance with an embodiment of this invention comprises a plurality of the trays as recited above wherein the trays are securely interlocked with each other by the interlocking units. The first layer, the second layer and the plurality of reservoirs of each of the trays are filled with cement, mortar, or concrete.

### BRIEF DESCRIPTION OF DRAWINGS

The above and other features and advantages of a multi-functional tray in accordance with the present invention are described in the following description of preferred embodiments with reference to the following figures:
Fig. 1 illustrating a top view of a tray in accordance with an embodiment of the present invention;
Fig. 2 is a bottom view of the tray of Fig. 1;
Fig. 3 is a side view of the tray of Fig. 1;
Fig. 4 is a perspective top view of the tray of Fig. 1;
Fig. 5 is a perspective bottom view of the tray of Fig. 1;
Fig. 6a is cross-sectional view of the tray of Fig. 1 wherein the entire tray, including the upper and lower portions, is filled with cement, mortar, and/or concrete in accordance with an embodiment of present invention;
Fig. 6b is a cross-sectional view of the tray of Fig. 1 wherein the upper portion of the tray is filled with a layer of thermal insulation material and a layer of cement, mortar, and/or concrete over the first layer in accordance with an embodiment of present invention; and
Fig. 6c illustrating a cross-sectional view of the tray of Fig. 1 wherein upper portion of the tray is filled with a layer of water retention material and a layer of planting medium over the first layer in accordance with an embodiment of present invention.

### DETAILED DESCRIPTION OF THE INVENTION

The present invention relates to a multi-functional tray that can be used in various applications to form different products, such as planter board for green roof plantation, thermal insulation panel for roof deck, solid cement panel for building construction, etc.

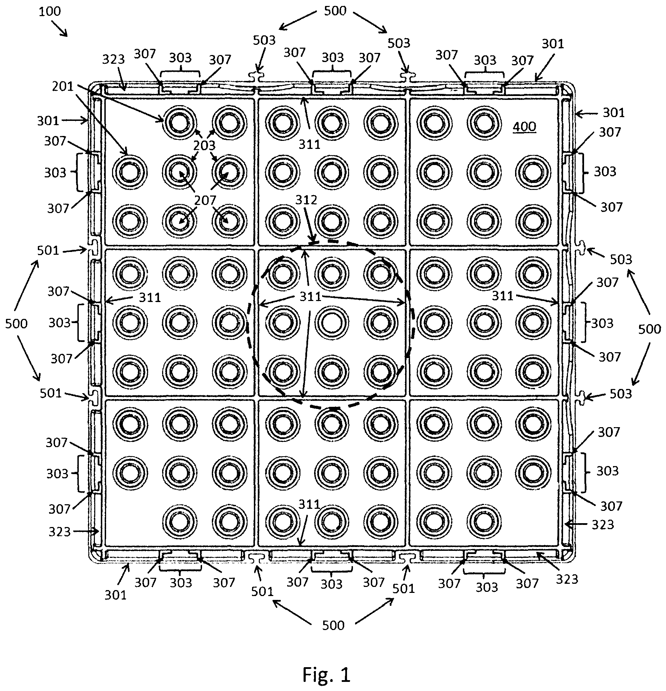

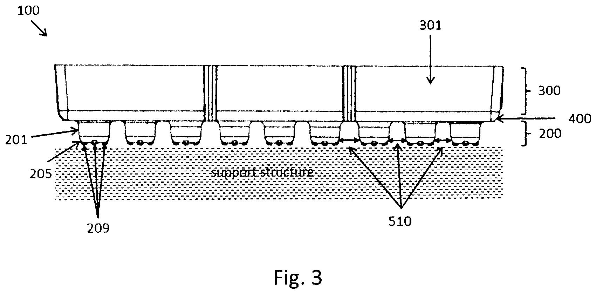

Figs. 1 to 5 show the top view, bottom view, side view and perspective views of a tray 100 in accordance with an embodiment of the present invention. Tray 100 comprises lower portion 200, upper portion 300, and backing layer 400 connected between lower portion 200 and upper portion 300 (see Fig. 3). These three components are integrally formed as a single structure to perform the functions of the invention. Tray 100 is made of a strong and high compressive strength material, such as polypropylene, polystyrene, metal, etc. In one embodiment, the dimensions of tray 100 are about 0.5 x 0.5 x 0.07 m (width x length x height) and able to withstand a high compressive load. One skilled in the art will recognise that tray 100 may be formed in other suitable dimensions without departing from this invention.

Backing layer 400 integrally connects lower portion 200 and upper portion 300 together, and together with lower portion 200 they support the load from upper portion 300. In one embodiment, backing layer 400 is a flat square plate with four equal sides of about 0.5 m. The size of backing layer 400 is associated with the desired dimensions of tray 100 and may be formed in any suitable shapes (e.g. rectangular, hexagon, etc.) and sizes without departing from this invention.

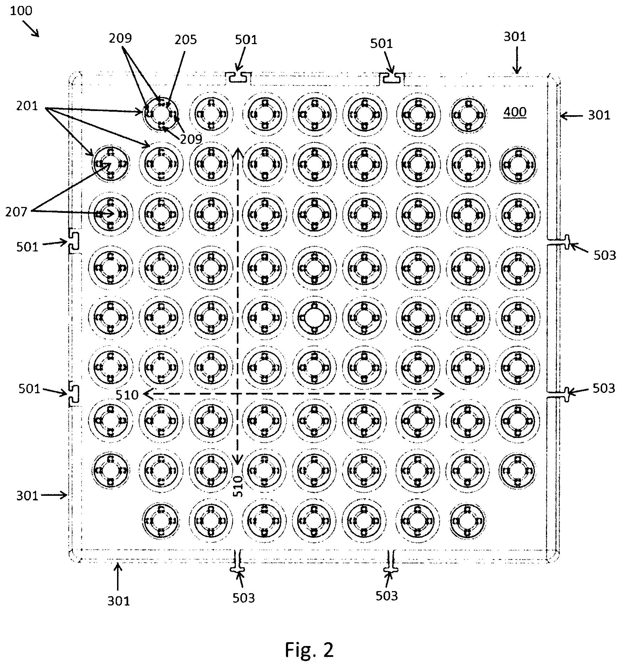

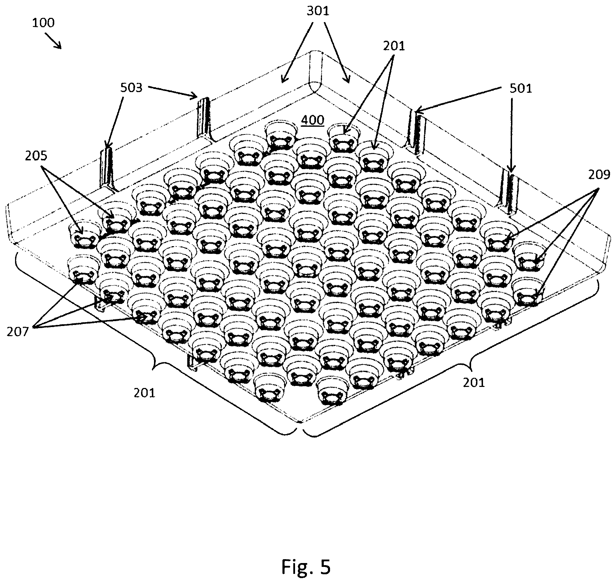

Lower portion 200 comprises a plurality of reservoirs 201 positioned spaced apart from each other across backing layer 400. Lower portion 200 helps in water collection, water drainage, as well as promoting air flow/circulation. In one embodiment, reservoirs 201 are being arranged as evenly spaced apart arrays across backing layer 400 (see Figs. 2 and 5). Reservoirs 201 may also be arranged in other suitable patterns or configurations provided the arrangement allows them to position steadily on a relatively flat surface on which tray 100 is installed. Each reservoir 201 should be a structure suitable for collecting water, such as a cup-like structure. In one embodiment, a cup-shaped reservoir 201 has a diameter of about 30 mm and a height of about 20 mm.

Each reservoir 201 has an opening 203 formed through backing layer 400 so as water/material from upper portion 300 may flow into reservoir 201 through opening 203. Reservoir 201 also has a base 205 (opposite opening 203) through which through hole 207 is formed for draining water from reservoir 201, as well as promoting air flow/circulation. As such, for example when tray 100 is used for planting vegetation, excess water from tray 100 collected by reservoir 201 may be drained out of tray 100 via through hole 207. One skilled in the art will recognise that two or more through holes 207 may be formed at base 205 and/or other parts of reservoir 201 without departing from this invention. Further, a plurality of small protrusions (or ribs, or footings) 209 are formed at base 205 which may symmetrically arranged adjacent to the rim of through hole 207 such that when tray 100 is installed on a support surface, protrusions 209 will be contacting the support surface and leaving a small gap (e.g. about 3 mm) between the support surface and the opening of through hole 207. This small gap helps in draining the water from reservoir 201. In other words, protrusions 209 prevent through hole 207 being blocked by the support surface on which tray 100 is installed.

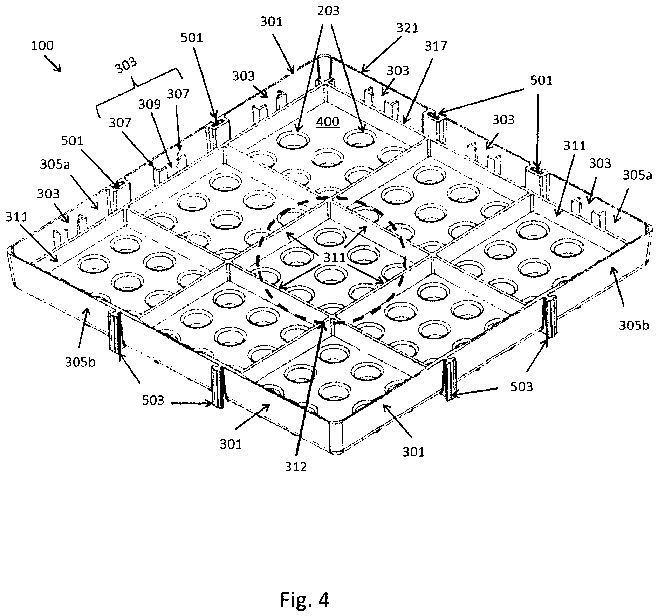

Upper portion 300 comprises sidewall 301 extending upwards from the peripheral edge of backing layer 400 to form a cavity for containing material. The height of sidewall 301 defines the capacity of the cavity and limits the amount of material may be filled into the cavity. In one embodiment, the height of sidewall 301 is about 50 mm. A plurality of securing units 303 are formed at the inner surface 305a of sidewall 301 and configured to hold and secure the material (e.g. cement, mortar and/or concrete) in the cavity to the sidewall 301 such that the material is prevented from separating from the inner surface 305a of sidewall 301. In one embodiment (see Fig. 4), each securing unit 303 is a pair of elongate L-shaped brackets 307 and arranged to be facing each other on the inner surface 305a of sidewall 301 to form a rectangular hollow housing having a slot 309 (i.e. elongate opening) opposite the inner surface 305a of sidewall 301. Both ends of the hollow housing are open-ended. For an example, cement is poured into the cavity such that the cavity and all the hollow housings (securing units 303) along the inner surface 305a of sidewall 301 are filled with the cement and integrally formed as a single cement body. Hence, when the cement is cured, the cement inside the hollow housings (which connected to the cement in the cavity) will secure the cement in the cavity to sidewall 301 and prevent it from separating from the inner surface 305a of sidewall 301. This feature is particularly useful when tray 100 is installed on a sloped surface where the material in the cavity will tend to shift towards the lower end of the slope and thus may crush the sidewall 301 at the lower end. Hence, securing units 303 prevent shifting of the material in the cavity and thus avoiding crushing of the sidewall 301 of tray 100 by the material.

Upper portion 300 further comprises a plurality of dividers 311 extending upward from backing layer 400 to divide backing layer 400 into a number of partitions 312 for containing material. In one embodiment, upper portion 300 has nine equally sized partitions 312 (see Figs. 1 and 4). Each partition 312 encompasses a certain number of reservoirs 201 of lower portion 200, such as eight or nine reservoirs as shown in Figs. 1 and 4. Each divider 311 has a height that is lower than the height of sidewall 301. Preferably, the height of each divider 311 is half of the height of sidewall 301. In one embodiment, the height of each divider 311 is about 25 mm. The different in height between sidewall 301 and dividers 311 allows upper portion 300 to be filled with two layers of material where first layer 315 of upper portion 300 may be filled with a first material within partitions 312 (from backing layer 400 up to the top ends 317 of dividers 311) and second layer 319 of upper portion may be filled with a second material over the first layer 315 up to the top end 321 of sidewall 301. First and second layers 315, 319 may be the same or different material, depending on the application of tray 100. The present of partitions 312 at the lower part of upper portion 300 helps to enhance the strength and rigidity of tray 100 and thus reduce the likelihood that backing layer 400 being crushed by load. Further, they serve to distribute the applied load weight and limit the lateral movement of the material in partitions 312. A side gap 323 is provided between the inner surface 305a of sidewall 301 and the adjacent dividers 311 so that first layer 315 of material can be enclosed by second layer 319 of material (except the bottom surface that contacts backing layer 400).

A plurality of interlocking units 500 are formed at the outer surface 305b of sidewall 301 for securely interlocking tray 100 with another tray. As such, a modular structure comprises of multiple trays 100 interlocked by interlocking units 500 may be formed. Interlocking units 500 may be formed in any suitable configurations with suitable interlocking mechanisms. In one embodiment, interlocking units 500 are the slot-type connectors comprise of female connector 501 and the matching male connector 503 (see Figs. 1, 2, 4 and 5).

When tray 100 is installed on a relatively flat surface, multi-directional water passageways 510 are formed underside tray 100 which are channels that allow underside water to flow in different directions to the drainage. Passageways 510 are the spaces underside tray 100 defined by backing layer 400, reservoirs 201 and the support surface on which the tray is installed. The width of each water passageway is equal to the distance between two adjacent reservoirs 201, such as 25 mm for an example. Water passageways 510 allow excess water underside tray 100 to quickly flow in different directions to the drainage so that no water being trapped or accumulated below tray 100.

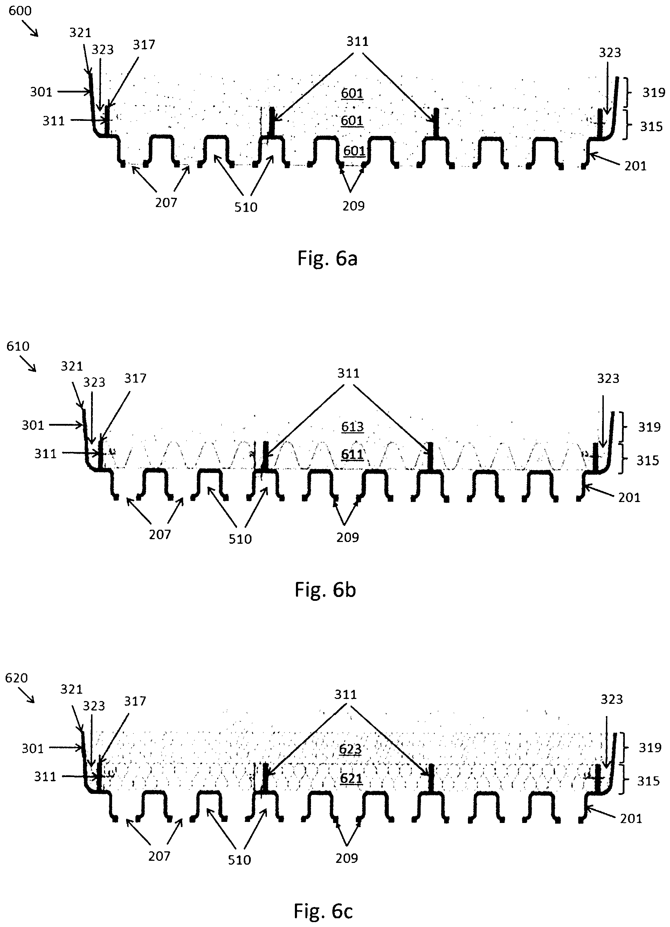

Tray 100 as described above is a multi-functional tray that can be used in various areas, such as green roof plantation, roof deck thermal insulation, building construction, etc. In the following, three different products with the use of tray 100 for different applications are presented. Fig. 6a shows an embodiment of a solid cement, mortar and/or concrete panel 600 using tray 100 for building construction application. In this embodiment, the entire tray 100, including first layer 315 and second layer 319 of upper portion 300 and the plurality of reservoirs 201 of lower potion 200, is filled with cement, mortar and/or concrete 601 (with or without chemical additives). A modular structure comprising a plurality of solid panels 600 may be formed by securely interlocking solid panels 600 with each other by interlocking units 500.

Fig 6b shows an embodiment of a thermal insulation panel 610 using tray 100 for roof deck thermal insulation application. In this embodiment, partitions 312 of upper portion 300 (i.e. first layer 315) are filled with thermal insulation material 611 and this first layer is covered by cement, mortar and/or concrete 613 (with or without chemical additives) (i.e. second layer 319). In this embodiment, reservoirs 201 of lower portion 200 are not filled with any material. Thermal insulation material 611 reduces the heat transfer from roof deck into the building below. In one embodiment, thermal insulation material 611 is polystyrene foam. A modular thermal insulation structure comprising a plurality of thermal insulation panels 600 may be formed by securely interlocking thermal insulation panels 610 with each other by interlocking units 500.

Fig. 6c shows an embodiment of planting structure 620 using tray 100 for green roof plantation application. In this embodiment, partitions 312 of upper portion 300 (i.e. first layer 315) are filled with water retention material 621 and this first layer is covered by planting medium 623 (i.e. second layer 319). In this embodiment, reservoirs 201 of lower portion 200 are not filled with any material. Water retention material 623 is capable of absorbing water from planting medium 623 and temporarily storing the water, and allowing excess water to be released to reservoirs 201. In one embodiment, water retention material 621 is polyurethane foam. Through holes 207 of reservoirs 201 allow water to be drained out of tray 100 and water passageways 510 prevent water stagnation which may potentially cause water leaking on roof deck. A modular planting structure comprising a plurality of planting structures 620 may be formed by securely interlocking planting structures 620 with each other by interlocking units 500.

It will be appreciated by persons skilled in the art that variations and/or modifications may be made to the invention as shown in the specific embodiments without departing from the scope of the invention as defined by the annexed claims. The present embodiments are, therefore, to be considered in all respects as illustrative and not restrictive.

## Claims

1. A tray (100) comprising:
an upper portion (300), a lower portion (200), and a backing layer (400) connected between the upper portion (300) and the lower portion (200);
the lower portion (200) comprising:
a plurality of reservoirs (201) positioned spaced across below the backing layer (400) wherein each reservoir (201) comprises an opening (203) defined through the backing layer (400) and a base (205) having a through hole (207) that allows water to pass through and a plurality of protrusions (209) adjacent to the through hole (207) for contacting with a support surface on which the tray (100) is installed leaving a gap between the through hole (207) and the support surface;
the upper portion (300) comprising:
a sidewall (301) extending upwards from a peripheral edge of the backing layer (400) to form a cavity for containing material wherein the sidewall (301) has a height that defines the capacity of the cavity;
a plurality of dividers (311) extending upward from the backing layer (400) to divide the backing layer (400) into a plurality of partitions (312) within the cavity with each partition (312) encompasses a certain number of the reservoirs (201) wherein each divider (311) having a height lower than the height of the sidewall (301) such that two layers of material can be formed in the upper portion (300) with a first layer (315) formed within the partitions (312) and a second layer (319) formed over the first layer (315) up to a top end (321) of the sidewall (301),
a plurality of securing units (303) formed at an inner surface (305a) of the sidewall (301) and configured to secure the material in the cavity to the sidewall (301) such that the material is prevented from separating from the inner surface (305a) of the sidewall (301);
a plurality of interlocking units (500) formed at an outer surface (305b) of the sidewall (301) and configured to interlock the tray (100) with another tray (100) so that a modular structure having multiple of the trays (100) securely interlocked by the interlocking units (500) can be formed;
multi-directional water passageways (510) formed underside the tray (100) which are spaces defined by the backing layer (400), the reservoirs (201) and the support surface on which the tray (100) is installed.

2. The tray (100) of claim 1 wherein the height of each of the dividers (311) is half of the height of the sidewall (301).

3. The tray (100) of claim 1 wherein the backing layer (400) is divided into nine partitions (312).

4. The tray (100) of claim 1 wherein the plurality of reservoirs (201) are being arranged as evenly spaced apart arrays.

5. The tray (100) of claim 1 is made of a high compressive strength material.

6. The tray (100) of claim 1 wherein each of the securing units (303) is a pair of elongate L-shaped brackets (307) arranged to be facing each other on the inner surface (305a) of the sidewall (301) to form a rectangular hollow housing having a slot (309).

7. The tray (100) of claim 1 wherein the first layer (315) of the upper portion (300) is filled with a water retention material (621) and the second layer (319) of the upper portion (300) is filled with a planting medium (623).

8. The tray (100) of claim 1 wherein the first layer (315) of the upper portion (300) is filled with a thermal insulation material (611) and the second layer (319) of the upper portion (300) is filled with cement, mortar, or concrete (613).

9. The tray (100) of claim 1 wherein the first layer (315) and the second layer (319) of the upper portion (300) and the plurality of reservoirs (201) of the lower portion (200) are filled with cement, mortar, or concrete (601).

10. A modular planting structure comprising:
a plurality of the trays (100) as recited in any one of claims 1 to 6 wherein the trays (100) are securely interlocked with each other by the interlocking units (500), the first layer (315) of each of the trays (100) is filled with a water retention material (621) and the second layer (319) of each of the trays (100) is filled with a planting medium (623).

11. A modular thermal insulation structure comprising:
a plurality of the trays (100) as recited in any one of claims 1 to 6 wherein the trays (100) are securely interlocked with each other by the interlocking units (500), the first layer (315) of each of the trays (100) is filled with a thermal insulation material (611) and the second layer (319) of each of the trays (100) is filled with cement, mortar, or concrete (613).

12. A modular building structure comprising:
a plurality of the trays (100) as recited in any one of claims 1 to 6 wherein the trays (100) are securely interlocked with each other by the interlocking units (500), the first layer (315), the second layer (319) and the plurality of reservoirs (201) of each of the trays (100) are filled with cement, mortar, or concrete (601).

## Patentansprüche

1. Schale (100), die folgendes umfasst:
einen oberen Teilbereich (300), einen unteren Teilbereich (200) und eine Verstärkungsschicht (400), die zwischen dem oberen Teilbereich (300) und dem unteren Teilbereich (200) eine Verbindung bildet;
wobei der untere Teilbereich (200) folgendes umfasst
eine Vielzahl von Behältern (201), die quer unter der Verstärkungsschicht (401) beabstandet positioniert sind, wobei jeder Behälter (201) eine Öffnung (203) umfasst, die durch die Verstärkungsschicht (400) definiert ist, und eine Basis (205), die ein Durchgangsloch (207) hat, das zulässt, dass Wasser durchläuft, und ein Vielzahl von Vorsprüngen (209) benachbart zum Durchgangsloch (207) zum Kontaktieren mit eine Stützoberfläche, auf welcher die Schale (100) installiert ist, während ein Spalt zwischen dem Durchgangsloch (207) und der Stützoberfläche gelassen wird;
wobei der obere Teilbereich (300) folgendes umfasst:
eine Seitenwand (301), die sich von einem peripheren Rand der Verstärkungsschicht (400) nach oben erstreckt, um einen Hohlraum zum Enthalten von Material auszubilden, wobei die Seitenwand (301) eine Höhe hat, die den Rauminhalt bzw. die Aufnahmefähigkeit des Hohlraums definiert;
eine Vielzahl von Trennwänden (311), die sich von der Verstärkungsschicht (400) nach oben erstrecken, um die Verstärkungsschicht (400) in eine Vielzahl von Teilbereichen (312) innerhalb des Hohlraums zu trennen, wobei jeder Teilbereich (312) eine bestimmte Anzahl der Behälter (201) umfasst, wobei jede Trennwand (311) eine Höhe hat, die niedriger als die Höhe der Seitenwand (301) ist, so dass zwei Schichten von Material im oberen Teilbereich (300) ausgebildet sein können, wobei eine erste Schicht (315) innerhalb der Teilbereiche (312) ausgebildet ist und eine zweite Schicht (319) über der ersten Schicht (315) bis zu einem obersten Ende (321) der Seitenwand (301) ausgebildet ist,
eine Vielzahl von Sicherungseinheiten (303), die an einer inneren Oberfläche (305a) der Seitenwand (301) ausgebildet sind und konfiguriert sind, um das Material im Hohlraum zur Seitenwand (301) zu sichern, so dass verhindert wird, dass das Material sich von der inneren Oberfläche (305a) der Seitenwand (301) trennt;
eine Vielzahl von Verriegelungseinheiten (500), die an einer äußeren Oberfläche (305b) der Seitenwand (301) ausgebildet sind und konfiguriert sind, um die Schale (100) mit einer weiteren Schale (100) zu verriegeln, so dass eine modulare Struktur mit mehreren der Schalen (100) sicher verriegelt durch die Verriegelungseinheiten (500) ausgebildet werden kann;
an der Unterseite der Schale (100) ausgebildete multidirektionale Wasserdurchgänge (510), die Räume sind, die durch die Verstärkungsschicht (400), die Behälter (201) und die Stützfläche, auf welcher die Schale (100) installiert ist, definiert sind.

2. Schale (100) nach Anspruch 1, wobei die Höhe von jeder der Trennwände (311) eine Hälfte der Höhe der Seitenwand (301) ist.

3. Schale (100) nach Anspruch 1, wobei die Verstärkungsschicht (400) in neun Teilbereiche (312) aufgeteilt ist.

4. Schale (100) nach Anspruch 1, wobei die Vielzahl von Behältern (201) als gleichmäßig voneinander beabstandete Felder angeordnet ist.

5. Schale (100) nach Anspruch 1, die aus einem Material hoher Druckfestigkeit hergestellt ist.

6. Schale (100) nach Anspruch 1, wobei jede der Sicherungseinheiten (303) ein Paar von länglichen L-förmigen Klammern (307) ist, die derart angeordnet sind, dass sie auf der inneren Oberfläche (305a) der Seitenwand (301) einander gegenüberliegen, um ein rechteckiges hohles Gehäuse mit einem Schlitz (309) auszubilden.

7. Schale (100) nach Anspruch 1, wobei die erste Schicht (315) des oberen Teilbereichs (300) mit einem Wasserretentionsmaterial (621) gefüllt ist und die zweite Schicht (319) des oberen Teilbereichs (300) mit einem Bepflanzungsmedium (623) gefüllt ist.

8. Schale (100) nach Anspruch 1, wobei die erste Schicht (315) des oberen Teilbereichs (300) mit einem thermischen Isoliermaterial (611) gefüllt ist und die zweite Schicht (319) des oberen Teilbereichs (300) mit Zement, Mörtel oder Beton (613) gefüllt ist.

9. Schale (100) nach Anspruch 1, wobei die erste Schicht (315) und die zweite Schicht (319) des oberen Teilbereichs (300) und die Vielzahl von Behältern (201) des unteren Teilbereichs (200) mit Zement, Mörtel oder Beton (601) gefüllt sind.

10. Modulare Bepflanzungsstruktur, die folgendes umfasst:
eine Vielzahl von Schalen (100) nach einem der Ansprüche 1 bis 6, wobei die Schalen (100) durch die Verriegelungseinheiten (500) sicher miteinander verriegelt sind, die erste Schicht (315) von jeder der Schalen (100) mit einem Wasserretentionsmaterial (621) gefüllt ist und die zweite Schicht (319) von jeder der Schalen (100) mit einem Bepflanzungsmedium (623) gefüllt ist.

11. Modulare thermische Isolationsstruktur, die folgendes umfasst:
eine Vielzahl von Schalen (100) nach einem der Ansprüche 1 bis 6, wobei die Schalen (100) durch die Verriegelungseinheiten (500) sicher miteinander verriegelt sind, die erste Schicht (315) von jeder der Schalen (100) mit einem thermischen Isoliermaterial (611) gefüllt ist und die zweite Schicht (319) von jeder der Schalen (100) mit Zement, Mörtel oder Beton (613) gefüllt ist.

12. Modulare Baustruktur, die folgendes umfasst:
eine Vielzahl von Schalen (100) nach einem der Ansprüche 1 bis 6, wobei die Schalen (100) durch die Verriegelungseinheiten (500) sicher miteinander verriegelt sind, die erste Schicht (315), die zweite Schicht (319) und die Vielzahl von Behältern (201) von jeder der Schalen (100) mit Zement, Mörtel oder Beton (613) gefüllt sind.

## Revendications

1. Plateau (100) comprenant :
une partie supérieure (300), une partie inférieure (200) et une couche de revers (400) reliée entre la partie supérieure (300) et la partie inférieure (200),
la partie inférieure (200) comprenant :
une pluralité de réservoirs (201) positionnés de façon répartie sur le dessous de la couche de revers (400), chaque réservoir (201) comprenant une ouverture (203) définie à travers la couche de revers (400) et une base (205) ayant un trou traversant (207) qui permet à l'eau de passer à travers et une pluralité de saillies (209) adjacentes au trou traversant (207) pour venir au contact d'une surface d'appui, sur laquelle le plateau (100) est installé de façon à laisser un espace entre le trou traversant (207) et la surface d'appui,
la partie supérieure (300) comprenant :
une paroi latérale (301) s'étendant vers le haut à partir d'un bord périphérique de la couche de revers (400) pour former une cavité destinée à contenir un matériau, la paroi latérale (301) présentant une hauteur qui définit la capacité de la cavité,
une pluralité de diviseurs (311) s'étendant vers le haut à partir de la couche de revers (400) pour diviser la couche de revers (400) en une pluralité de partitions (312) à l'intérieur de la cavité, chaque partition (312) englobant un certain nombre de réservoirs (201), chaque diviseur (311) présentant une hauteur qui est inférieure à la hauteur de la paroi latérale (301) de sorte à pouvoir former deux couches de matériaux dans la partie supérieure (300) avec une première couche (315) formée à l'intérieur des séparations (312) et une seconde couche (319) formée par-dessus la première couche (315) jusqu'à une extrémité supérieure (321) de la paroi latérale (301),
une pluralité d'unités de fixation (303) formées sur une surface interne (305a) de la paroi latérale (301) et configurées pour fixer le matériau dans la cavité sur la paroi latérale (301) de sorte à empêcher le matériau de se séparer de la surface interne (305a) de la paroi latérale (301),
une pluralité d'unités d'interverrouillage (500) formées sur une surface externe (305b) de la paroi latérale (301) et configurées pour interverrouiller le plateau (100) avec un autre plateau (100) de sorte à pouvoir former une structure modulaire ayant une multitude de plateaux (100) fermement interverrouillés par les unités d'interverrouillage (500),
des voies multidirectionnelles d'écoulement d'eau (510) formées sur la face inférieure du plateau (100) qui sont des espaces définis par la couche de revers (400), les réservoirs (201) et la surface d'appui, sur laquelle le plateau (100) est installé.

2. Plateau (100) suivant la revendication 1, dans lequel la hauteur de chaque diviseur (311) correspond à la moitié de la hauteur de la paroi latérale (301).

3. Plateau (100) suivant la revendication 1, dans lequel la couche de revers (400) est divisée en neuf partitions (312).

4. Plateau (100) suivant la revendication 1, dans lequel la pluralité de réservoirs (201) sont disposés en réseaux uniformément espacés.

5. Plateau (100) suivant la revendication 1, le plateau étant fabriqué dans un matériau à résistance élevée à la compression.

6. Plateau (100) suivant la revendication 1, dans lequel chaque unité de fixation (303) est une paire de supports en forme de L allongé (307) disposés de façon à faire face l'un à l'autre sur la surface interne (305a) de la paroi latérale (301) pour former un boîtier creux rectangulaire présentant une fente (309).

7. Plateau (100) suivant la revendication 1, dans lequel la première couche (315) de la partie supérieure (300) est remplie d'un matériau de rétention d'eau (621) et la seconde couche (319) de la partie supérieure (300) est remplie d'un milieu de plantation (623).

8. Plateau (100) suivant la revendication 1, dans lequel la première couche (315) de la partie supérieure (300) est remplie d'un matériau d'isolation thermique (611) et la seconde couche (319) de la partie supérieure (300) est remplie de ciment, de mortier ou de béton (613).

9. Plateau (100) suivant la revendication 1, dans lequel la première couche (315) et la seconde couche (319) de la partie supérieure (300) et la pluralité des réservoirs (201) de la partie inférieure (200) sont remplis de ciment, de mortier ou de béton (601).

10. Structure de plantation modulaire comprenant :
une pluralité de plateaux (100) selon une des revendications 1 à 6, les plateaux (100) étant fermement interverrouillés par les unités d'interverrouillage (500), la première couche (315) de chaque plateau (100) étant remplie d'un matériau de rétention d'eau (621) et la seconde couche (319) de chaque plateau (100) étant remplie d'un milieu de plantation (623).

11. Structure d'isolation thermique modulaire comprenant :
une pluralité de plateaux (100) selon une des revendications 1 à 6, les plateaux (100) étant fermement interverrouillés par les unités d'interverrouillage (500), la première couche (315) de chaque plateau (100) étant remplie d'un matériau d'isolation thermique (611) et la seconde couche (319) de chaque plateau (100) étant remplie de ciment, de mortier ou de béton (613).

12. Structure de construction modulaire comprenant :
une pluralité de plateaux (100) selon une des revendications 1 à 6, les plateaux (100) étant fermement interverrouillés par les unités d'interverrouillage (500), la première couche (315), la seconde couche (319) et la pluralité de réservoirs (201) de chaque plateau (100) étant remplis de ciment, de mortier ou de béton (601).
